# EUROPEAN PATENT APPLICATION

(11) **EP 3 299 375 A1**
(43) Date of publication of application: **28.03.2018**
(21) Application number: 16382444.4
(22) Date of filing: 23.09.2016
(51) Int. Cl.: C07F 9/50, B01J 27/185, C01B 3/06

(54) **NOBLE METAL NANOPARTICLES COATED WITH TERPHENYLPHOSPHINE LIGANDS FOR H2 GENERATION FROM AMMONIA-BORANE AND ALCOHOLS**

(71) Applicant: Consejo Superior de Investigaciones Científicas (CSIC), 41013 Sevilla (ES); Centre National de la Recherche Scientifique CNRS, 75794 Paris Cedex 16 (FR); Universidad de Sevilla, 41013 Sevilla (ES)
(72) Inventor: SUÁREZ ESCOBAR, Andrés Luis, 41092 Sevilla (ES); LARA MÚÑOZ, Patricia, 41013 Sevilla (ES); ECARD PHILIPPOT, Karine, 75794 Paris cedex 16 (FR)
(74) Representative: Pons

(57) **Abstract**

The present invention relates to catalysts comprising noble metal nanoparticles and terphenylphosphine ligands of formula (I), wherein each R₁ and R₂ represent independently C₁-C₄ alkyl or C₁-C₄ alkoxy; wherein R₃ and R₄ represent independently C₁-C₄ alkyl; and wherein n and m a whole number between 1 and 5; and wherein the noble metal is selected from Ru, Os, Rh, Ir, Pd and Pt and the ligand/noble metal molar ratio is between 0.05 and 0.8.

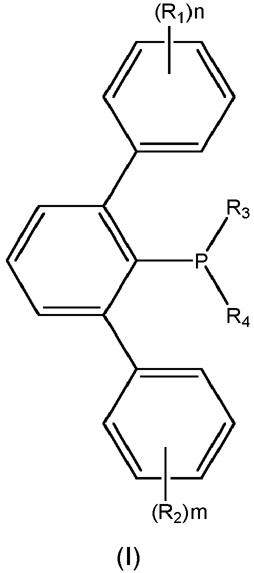

## Description

The invention relates to noble metal nanoparticles coated with terphenylphosphine ligands as catalysts for production of H₂ from the alcoholysis of ammonia-borane (AB, NH₃·BH₃).

### BACKGROUND ART

As a consequence of the limited reserves of fossil fuels and the adverse effects on the climate caused by their use in energy production, the development of new ways for generation of energy from renewable and less polluting sources remains a major social challenge. In addition, since energy production from renewable sources is not always temporarily coupled with the energy demand, a full implementation of renewable energy sources requires the development of methods for the storage of energy surplus. In this context, energy storage as chemical energy in the hydrogen molecule is considered as a practical alternative for both stationary and mobile applications.

In fact, the implementation of a global economy based on hydrogen as an energy vector ("Hydrogen Economy") has been envisaged [Hydrogen as a Future Energy Carrier, Eds. A. Zuttel, A. Borgschulte, L. Schalpbach, 2008, Wiley-VCH]. For example, by using fuel cells, the energy stored in the molecule of H₂ can be cleanly converted into electricity. In this transformation, water is the only generated by-product, preventing emissions of greenhouse gases. As an example, it can be mentioned the use of this technology in different fields, such as in mobile electronic devices and in the automotive industry (i.e. hydrogen-powered vehicles).

The controlled storage and supply of H₂ is a complex problem, primarily due to the physical properties of this molecule (highly flammable gas under normal pressure and temperature conditions) [N.Armaroli, V. Balzani, ChemSusChem 2011, 4, 21-26]. Among the different approaches tested, H₂-storage in a chemical reagent by formation of covalent bonds has attracted considerable attention [M. Yadav, Q. Xu, Energy Environ. Sci. 2012, 5, 9698-9725; U. Eberle, M. Felderhoff, F. Schuth, Angew. Chem. Int. Ed. 2009, 48, 6608-6630]. In this context, ammonia-borane (AB, NH₃·BH₃), due to its high gravimetric content of hydrogen (19.6% wt) and physical properties (stable solid, non-flammable) is considered as one of the most promising H₂-rich containing materials for applications in automotive and mobile devices [T.B. Marder, Angew. Chem. Int. Ed. 2007, 46, 8116-81118; B. Peng, J. Chen, Energy Environ. Sci. 2008, 1, 479-483].

Hydrogen generation from AB can be performed in different ways. A first method is based on the thermal or catalytic decomposition of AB. This methodology has the disadvantage of the formation of different by-products, from which it is difficult to regenerate the AB molecule [N. C. Smythe, J.C. Gordon, Eur. J. Inorg. Chem. 2010, 509-521]. In addition, in these processes full release of the available hydrogen in AB (3 equiv. of H₂) is normally not achieved. A second type of processes is based on the generation of H₂ through solvolysis of AB by a protic solvent, such as water [U. Sanyal, U.B. Demirci, B. R. Jagirdar, P. Miele, ChemSusChem 2011, 4, 1731-1739; H-L. Jiang, Q. Xu, Catal. Today 2011, 170, 56-63; M. Zahmakiran, S. Özkar, Top. Catal. 2013, 56, 1171-1183] or an alcohol [P. V. Ramachandran, P.D. Gagare, Inorg. Chem. 2007, 46, 7810-7817; P.V. Ramachandran, P.D. Gagare, C. R. Bhimapaka, US20070243122]. Despite AB presents a high solubility in water and methanol (23% wt at 23°C) and its solutions are stable for long periods of time, H₂ generation can be produced under smooth temperature conditions in the presence of a catalyst. In these catalytic reactions, 3 equiv. of H₂/equiv. from AB are generated with the concomitant generation of predominantly a single product. In the case of the hydrolysis of AB, the formed ammonium metaborate is difficult to recycle back. As an alternative, methanolysis of AB mainly yields ammonium tetramethoxide, which can be easily transformed in AB by reaction of this material with LiAlH₄ and NH₄Cl at room temperature [P. V. Ramachandran, P. D. Gagare, Inorg. Chem. 2007, 46, 7810-7817; P. V. Ramachandran, P. D. Gagare, C. R. Bhimapaka US20070243122].

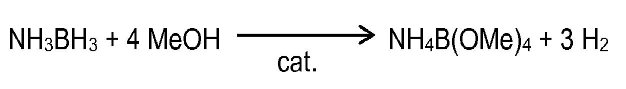

In the literature, different catalysts have been described for the methanolysis of ammonia borane. Particularly, nanoparticles of noble metals (Pd, Rh, Ru) supported on an inorganic solid [S. Çal 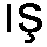 kan, M. Zahmakiran, S. Özkar, *Appl. Catal. B Environ.* **2010,** *93*, 387-394; H-B. Dai, X-D. Kang, P. Wang, Int. J. Hydrogen Energy 2010, 35, 10317-10323; D. Özhava, S. Özkar, Int. J. Hydrogen Energy 2015, 40, 10491-10501; D. Özhava, S. Özkar, Appl. Catal. B Environ. 2016, 181, 716-726] or an organic support [H. Erdog 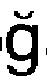 an, Ö. Metin, S. Özkar, *Phys. Chem. Chem. Phys.* **2009,** *11*, 10519-10525; H. Erdo 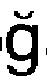 an, Ö. Metin, S. Özkar, *Catal. Today* **2011,** *170,* 93-98; J-K. Sun, W-W. Zhan, T. Akita, Q. Xu, J. Am. Chem. Soc. 2015, 137, 7063-7066; S. Peng, J. Liu, J. Zhang, F. Wang, Int. J. Hydrogen Energy 2015, 40, 10856-10866] have provided high catalytic activities. In addition, metal complexes based on phosphine ligands have also been employed for hydrogen generation from AB and alcohols [K. Abdur-Rashid, T. Graham, C-W. Tsang, X. Chen, R. Guo, W. Jia, D. Amoroso, C. Sui-Seng, WO2008/141439].

### SUMMARY OF THE INVENTION

The present invention discloses novel catalysts comprising noble metal nanoparticles coated with terphenylphosphine ligands and their use for H₂ generation by reaction of ammonia-borane with an alcohol.

The present invention has the following advantages:
- It allows the formation of well-controlled and very stable nanoparticles;
- Electronic and steric properties of nanoparticles can be modified easily by a proper choice of the terphenylphosphine ligands, allowing the control of the catalytic activity;
- when the alcohol is methanol, it is easy to recycle the catalyst by distillation of the H₂-depleted ammonium tetramethoxide by-product.

The first aspect of the present invention relates to noble metal nanoparticles coated with terphenylphosphine ligands of formula (I), 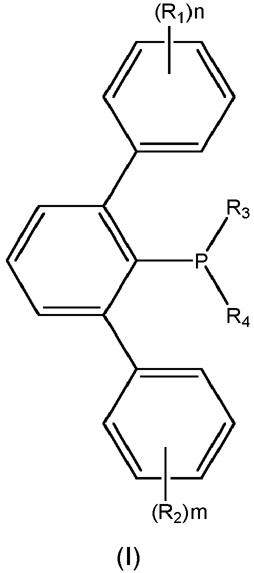 wherein:
each R₁ and R₂ represents independently C₁-C₁₀ alkyl, C₃-C₁₀ cycloalkyl or C₁-C₁₀ alkoxy;
R₃ and R₄ represent independently C₁-C₁₀ alkyl, C₃-C₁₀ cycloalkyl, C₁-C₁₀ alkoxy, phenyl or C₅-C₇ heteroaryl;
n and m are whole numbers independently between 0 and 5; and wherein the noble metal is selected from Ru, Os, Rh, Ir, Pd and Pt and the ligand/noble metal molar ratio is between 0.05 and 0.8.

A C₁-C₁₀ alkyl refers to a linear or branched alkyl chain containing between 1 to 10 carbon atoms and includes the groups methyl, ethyl, propyl, isopropyl, butyl, isobutyl, *sec-*butyl, *terc*-butyl, etc.

A C₃-C₁₀ cycloalkyl refers to a non-aromatic ring that it is fully hydrogenated containing a cycle of an alkyl chain between 3 and 10 carbon atoms. Examples of such carbocyclic rings include cyclopropyl, cyclobutyl, cyclopentyl,etc.

A C₁-C₁₀ alkoxy refers to a linear or branched alkoxy chain containing between 1 to 10 carbon atoms and includes the groups methoxy, ethoxy, 1-propyloxy, 2-propyloxy, 1-butoxy, isobutoxy, *sec*-butoxy and *terc*-butoxy etc.

A C₅-C₇ heteroaryl is an aromatic ring of 5 to 7 members which contains one or two heteroatoms (an atom different from carbon) selected from N, O and S.

In the context of the invention, a nanoparticle coated with ligands is a nanoparticle comprising a noble metal surface functionalized by covalently bound ligands.

In one embodiment of the first aspect of the present invention, the noble metal is selected from Ru, Pd and Pt, preferably the noble metal is Pt.

In another embodiment of the first aspect of the present invention, n and m is 1 or 2, preferably n is 2 and/or m is 2.

In another embodiment of the first aspect of the present invention, the terphenylphosphine ligands have the formula (II): 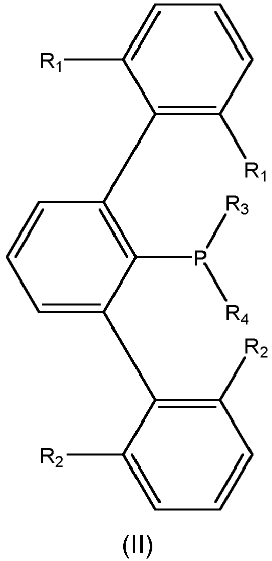 wherein R₁, R₂, R₃ and R₄ were defined above.

In another embodiment of the first aspect of the present invention, each R₁ and R₂ represents independently C₁-C₁₀ alkyl or C₃-C₁₀ cycloalky; preferably each R₁ and R₂ represents independently C₁-C₄ alkyl, more preferably each R₁ and R₂ represents independently methyl, ethyl, propyl and isopropyl. Preferably, R₁ and R₂ are equal.

In another embodiment of the first aspect of the present invention, R₁ and R₂ are methyl.

In another embodiment of the first aspect of the present invention, the terphenylphosphine ligands have the formula (II), the noble metal is Pt and R₁ and R₂ are methyl.

In another embodiment of the first aspect of the present invention, R₁ and R₂ are isopropyl.

In another embodiment of the first aspect of the present invention, the terphenylphosphine ligands have the formula (II), the noble metal is Pt and R₁ and R₂ are isopropyl.

In another embodiment of the first aspect of the present invention, R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the first aspect of the present invention, the terphenylphosphine ligands have the formula (II), the noble metal is Pt, R₁ and R₂ are methyl and R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the first aspect of the present invention, the terphenylphosphine ligands have the formula (II), the noble metal is Pt, R₁ and R₂ are isopropyl and R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the first aspect of the present invention, R₃ and R₄ are methyl.

In another embodiment of the first aspect of the present invention, the terphenylphosphine ligands have the formula (II), the noble metal is Pt, R₁ and R₂ are isopropyl and R₃ and R₄ are methyl.

In another embodiment of the first aspect of the present invention, the terphenylphosphine ligands have the formula (II), the noble metal is Pt, R₁ and R₂ are methyl and R₃ and R₄ are methyl.

In another embodiment of the first aspect of the present invention, R₃ and R₄ are ethyl.

In another embodiment of the first aspect of the present invention, the terphenylphosphine ligands have the formula (II), the noble metal is Pt, R₁ and R₂ are isopropyl and R₃ and R₄ are ethyl.

In another embodiment of the first aspect of the present invention, the terphenylphosphine ligands have the formula (II), the noble metal is Pt, R₁ and R₂ are methyl and R₃ and R₄ are ethyl.

In another embodiment of the first aspect of the present invention, the terphenylphosphine ligands have the formula (A), (B) or (C):

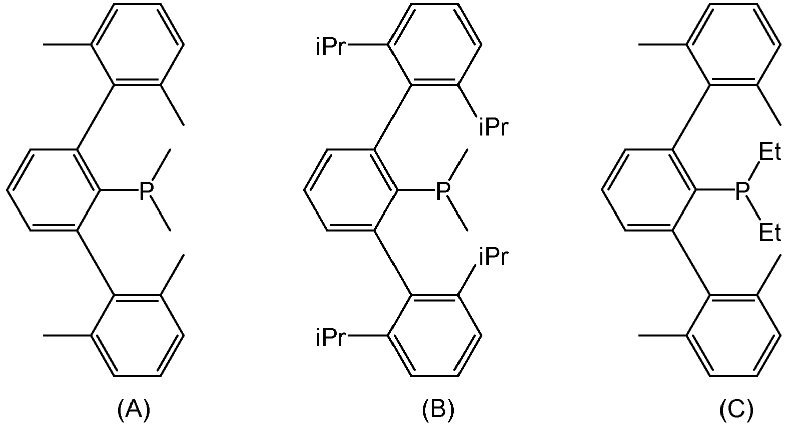

The nanoparticles of the invention are coated by ligands of formula (A), (B), (C) or mixtures thereof.

In another embodiment of the first aspect of the present invention, the terphenylphosphine ligands have the formula B.

In another embodiment of the first aspect of the present invention, the terphenylphosphine ligands have the formula B and the ligand/Pt molar ratio is 0.2

In another embodiment of the first aspect of the present invention, the ligand/noble metal molar ratio is between 0.1 and 0.7, preferably between 0.2 and 0.5.

In another embodiment of the first aspect of the present invention, the ligand/noble metal molar ratio is between 0.1 and 0.7, preferably between 0.2 and 0.5 and the noble metal is Pt.

In another embodiment of the first aspect of the present invention, the mean diameter of the noble metal nanoparticles is between 1 nm and 3 nm, preferably between 1.5 nm and 2.5 nm, more preferably between 1.9 nm and 2.3 nm.

A second aspect of the present invention relates to a process for obtaining the nanoparticles as described above comprising the steps:
a) provide a solution of a noble metal complex, wherein the noble metal is selected from Ru, Os, Rh, Ir, Pd and Pt; and
b) put the solution of step (a) in contact with the ligand of formula (I) wherein R₁, R₂, R₃, R₄, m and n are defined above, at a temperature in between -60°C and 30°C under H₂ at a pressure between 1. and 5 bar, preferably the temperature is between -60°C and -30°C.

In another embodiment of the second aspect of the present invention, the noble metal complex is selected from [Pt₂(dba)₃], [Pt(dba)₂], Pt(COD)₂, PtCl₂(COD)₂, PtMe2(COD)2, PtMe2(NBD), PtPh₂(COD)₂, Pt(NBD)₃, [Pd(dba)₂], [Ru(COD)(COT)], [Rh(allyl)₃], [Ir(allyl)₃], Ir(acac)₃, [Rh(OMe)(COD)]₂ [Ir(OMe)(COD)]₂ and mixtures thereof, preferably the noble metal complex is selected from [Pt(dba)₂], [Pt₂(dba)₃] and mixtures thereof, more preferably the metal complex is a mixture of [Pt(dba)₂], [Pt₂(dba)₃].
In one embodiment of the second aspect of the present invention, the noble metal is selected from Ru, Pd and Pt, preferably Pt. Therefore, the noble metal complex is selected from [Pt₂(dba)₃], [Pt(dba)₂], Pt(COD)₂, PtCl₂(COD)₂, PtMe2(COD)2, PtMe2(NBD), PtPh₂(COD)₂, Pt(NBD)₃, [Pd(dba)₂], [Ru(COD)(COT)], and mixtures thereof, preferably the noble metal complex is selected from [Pt(dba)₂], [Pt₂(dba)₃] and mixtures thereof, more preferably the metal complex is a mixture of [Pt(dba)₂], [Pt₂(dba)₃].

Dba is dibenzylideneacetone; COD is 1,5-cyclooctadiene; NBD is 2,5-norbornadiene; COT is 1,3,5,7-cyclooctatetraene; acac is acetylacetonate.

In another embodiment of the second aspect of the present invention, n and m is 1 or 2, preferably n is 2 and/or m is 2.

In another embodiment of the second aspect of the present invention, the terphenylphosphine ligands have the formula (II): 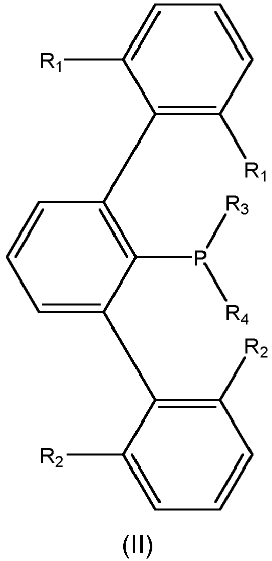 wherein R₁, R₂, R₃ and R₄ were defined above.

In another embodiment of the second aspect of the present invention, each R₁ and R₂ represents independently C₁-C₁₀ alkyl or C₃-C₁₀ cycloalkyl; preferably each R₁ and R₂ represents independently C₁-C₄ alkyl, more preferably each R₁ and R₂ represents independently methyl, ethyl, propyl and isopropyl. Preferably, R₁ and R₂ are equal.

In another embodiment of the second aspect of the present invention, R₁ and R₂ are methyl.

In another embodiment of the second aspect of the present invention, the terphenylphosphine ligands have the formula (II), the noble metal is Pt and R₁ and R₂ are methyl.

In another embodiment of the second aspect of the present invention, R₁ and R₂ are isopropyl.

In another embodiment of the second aspect of the present invention, the terphenylphosphine ligands have the formula (II), the noble metal is Pt and R₁ and R₂ are isopropyl.

In another embodiment of the second aspect of the present invention, R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the second aspect of the present invention, the terphenylphosphine ligands have the formula (II), the noble metal is Pt, R₁ and R₂ are methyl and R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the second aspect of the present invention, the terphenylphosphine ligands have the formula (II), the noble metal is Pt, R₁ and R₂ are isopropyl and R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

In another embodiment of the second aspect of the present invention, R₃ and R₄ are methyl.

In another embodiment of the second aspect of the present invention, the terphenylphosphine ligands have the formula (II), the noble metal is Pt, R₁ and R₂ are isopropyl and R₃ and R₄ are methyl.

In another embodiment of the second aspect of the present invention, the terphenylphosphine ligands have the formula (II), the noble metal is Pt, R₁ and R₂ are methyl and R₃ and R₄ are methyl.

In another embodiment of the second aspect of the present invention, R₃ and R₄ are ethyl.

In another embodiment of the second aspect of the present invention, the terphenylphosphine ligands have the formula (II), the noble metal is Pt, R₁ and R₂ are isopropyl and R₃ and R₄ are ethyl.

In another embodiment of the second aspect of the present invention, the terphenylphosphine ligands have the formula (II), the noble metal is Pt, R₁ and R₂ are methyl and R₃ and R₄ are ethyl.

In another embodiment of the second aspect of the present invention, the terphenylphosphine ligands have the formula (A), (B) or (C), preferably the terphenylphosphine ligands have the formula (B).

In another embodiment of the second aspect of the present invention, the ligand/noble metal molar ratio is between 0.1 and 0.7, preferably between 0.2 and 0.5.

In another embodiment of the second aspect of the present invention, the ligand/noble metal molar ratio is between 0.1 and 0.7, preferably between 0.2 and 0.5 and the noble metal is Pt.

In another embodiment of the second aspect of the present invention, the mean diameter of the noble metal nanoparticles is between 1 nm and 3 nm, preferably between 1.5 nm and 2.5 nm, more preferably between 1.9 nm and 2.3 nm.

A third aspect of the present invention relates to the use of the nanoparticles as described above as a catalyst for hydrogen generation from ammonia-borane. Preferably the hydrogen generation from the alcoholysis of ammonia-borane, more preferably from the methanolysis of ammonia-borane.

A fourth aspect of the present invention relates to a process for the hydrogen generation from ammonia-borane and an C₁-C₆ alcohol comprising contacting a C₁-C₆ alcohol with ammonia-borane in the presence of the noble metal nanoparticles coated with terphenylphosphine ligands of formula (I) as described above at a temperature between 20°C to 60°C.

A C₁-C₆ alcohol refers to a linear or branched alkyl chain containing 1 to 6 carbon atoms and at least one hydroxyl group. Examples of such alcohol are methanol, ethanol, propanol, isopropanol, butanol, isobutanol, *sec*-butanol, *terc*-butanol, pentanol, etc. Preferably the C₁-C₆ alcohol is selected from methanol, ethanol, propanol and isopropanol, more preferably the C₁-C₆ alcohol is methanol.

In one embodiment of the fourth aspect of the present invention, the molar ratio ammonia-borane/noble metal is 100 to 10000, preferably the molar ratio ammonia-borane/noble metal is 500 to 5000.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### DESCRIPTION OF THE DRAWINGS

- **Fig. 1A.**: TEM image of the CN1 of example 1.
- **Fig. 1B.**: Size histogram of the CN1 of example 1
- **Fig. 2A.**: TEM image of the CN2 of example 2.
- **Fig. 2B**: Size histogram of the CN2 of example 2
- **Fig. 3A.**: TEM image of the CN3 of example 3
- **Fig. 3B**: Size histogram of the CN3 of example 3
- **Fig. 4A**: TEM image of the CN4 of example 4
- **Fig. 4B**: Size histogram of the CN4 of example 4
- **Fig. 5**: H₂ generation using the coated nanoparticles of the invention.

### EXAMPLES

All the reactions have been carried out in a glovebox or under nitrogen or argon atmosphere. Solvents have been dried by already known procedures and distilled under argon or nitrogen atmosphere before their use. Methanol was dried with sodium methoxide (MeONa) and distilled under argon. AB was purchased from Aldrich and was used without any further purification. Terphenylphosphine ligands were prepared according to already published procedures [R. C. Smith, R. A. Woloszynek, W. Chen, T. Renb, J. D. Protasiewicza, Tetrahedron Lett. 2004, 45, 8327-8330; B. Buster, A. A. Diaz, T. Graham, R. Khan, M. A. Khan, D. R. Powell, R. J. Wehmschulte, Inorg. Chim. Acta 2009, 362, 3465-3474; L. Ortega-Moreno, M. Fernández-Espada, J. J. Moreno, C. Navarro-Gilabert, J. Campos, S. Conejero, J. López-Serrano, C. Maya, R. Peloso, E. Carmona, Polyhedron, 2016, 116, 170-181]. [Pt(dba)₂] was obtained by a previously reported method [K. Moseley, P. M. Maitlis, Chem. Commun. 1971, 982-983], and its %wt of Pt was determined by ICP. TEM analyses were performed at the "Centro de Investigación, Tecnología e Innovación -CITIUS" by using a Philips CM-200 working at 200 kV with a point resolution of 2.8 A. The approximation of the particles mean size was made through a manual analysis of enlarged micrographs by measuring *ca* 200 particles on a given grid. ICP analyses were performed at the "Mikroanalystisches Labor Pascher" (Germany). ¹¹B NMR spectra were acquired in a Bruker spectrometer DPX-300 (96 MHz for ¹¹B) using the signal of BF₃(C₂H₅)₂O as reference.

### Synthesis of nanoparticles

Platinum nanoparticles have been prepared by adaptation of a previously reported procedure [C. Amiens et al., J. Am. Chem. Soc. 1993, 115, 11638; K. Philippot and B. Chaudret, in Comprehensive Organometallic Chemistry III, R. H. Crabtree & M. P. Mingos (Eds-in-Chief), Elsevier, Vol. 12 - Applications III: Functional Materials, Environmental and Biological Applications, Dermot O'Hare (Volumen Ed.), 2007, Chapter 12-03, 71-99], using [Pt(dba)₂] (dba= dibenzylideneacetone) under 3 bar of H₂ in the presence of variable amounts of ligand.

### Example 1. Synthesis of coated nanoparticles CN1: Ligand A, ligand/Pt ratio = 0.2

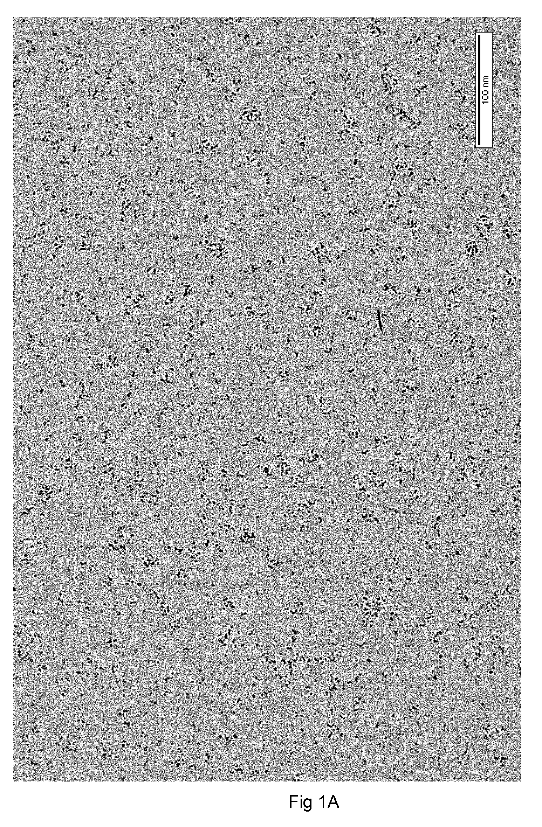

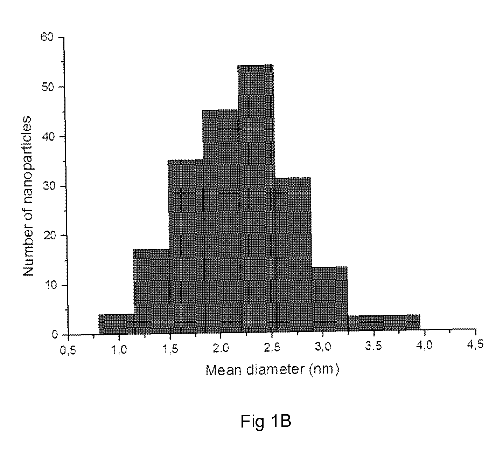

[Pt(dba)₂] (250 mg, 0.36 mmol) was introduced in a Fischer-Porter bottle and dissolved in 35 ml of freshly distilled and degassed THF by argon bubbling. The resulting violet solution was cooled at -60°C and a solution of 15 ml of THF containing ligand A (25.6 mg, 0.074 mmol) was added into the reactor. The Fischer-Porter bottle was pressurized with 3 bar of H₂ and the solution was left to reach slowly the room temperature under vigorous stirring. The homogenous solution, which turns black after 30 minutes of reaction, was kept under stirring overnight at room temperature. After this period of time, excess of H₂ was eliminated and the volume of solvent was reduced to 10 ml under vacuum. 40 ml of pentane were then added to the colloidal suspension which was cooled down to -30°C to precipitate the particles. After filtration under argon with a cannula, the black solid powder was washed twice with pentane (2 x 40 ml) and filtrated again before drying under vacuum. Pt content (ICP): 64%, TEM (see fig. 1A): NPs of 2.2 nm mean size (standard deviation 0.5, see Figure 1 B).

### Example 2. Synthesis of coated nanoparticles CN2: Ligand A, ligand/Pt ratio = 0.5

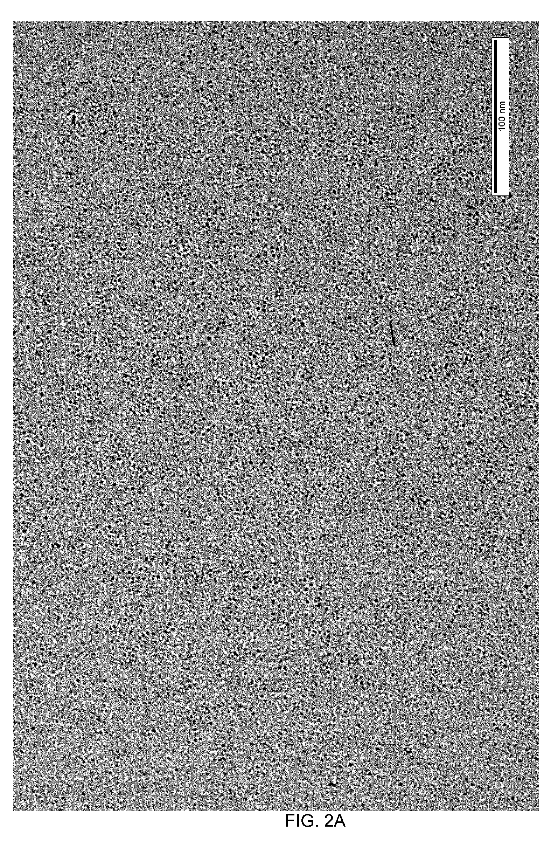

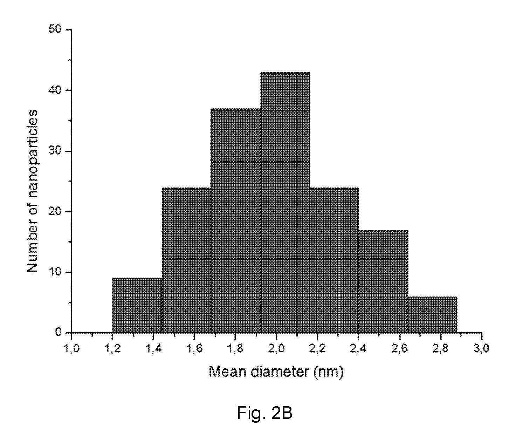

[Pt(dba)₂] (250 mg, 0.36 mmol) was introduced in a Fischer-Porter bottle and dissolved in 35 ml of freshly distilled and degassed THF by argon bubbling. The resulting violet solution was cooled at -60°C and a solution of 15 ml of THF containing ligand A (64.1 mg, 0.19 mmol) was added into the reactor. The Fischer-Porter bottle was pressurized with 3 bar of H₂ and the solution was left to reach slowly the room temperature under vigorous stirring. The homogenous solution, which turns black after 30 minutes of reaction, was kept under stirring overnight at room temperature. After this period of time, excess of H₂ was eliminated and the volume of solvent was reduced to 10 ml under vacuum. 40 ml of pentane were then added to the colloidal suspension which was cooled down to -30°C to precipitate the particles. After filtration under argon with a cannula, the black solid powder was washed twice with pentane (2 x 40 ml) and filtrated again before drying under vacuum. Pt content (ICP): 52%, TEM (Fig. 2A): NPs of 2.0 (0.3) nm mean size (see Figure 2B).

### Example 3. Synthesis of coated nanoparticles CN3: Ligand B, ligand/Pt ratio = 0.2

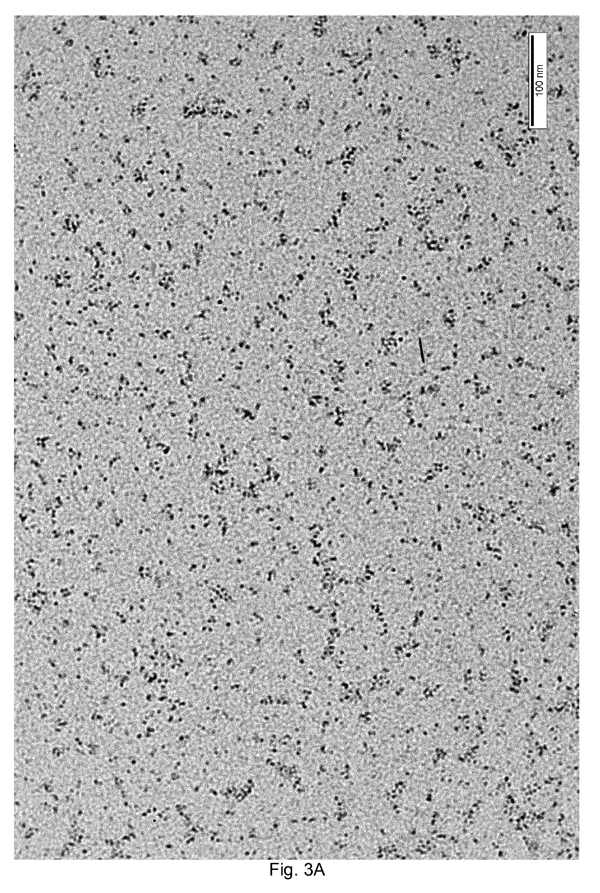

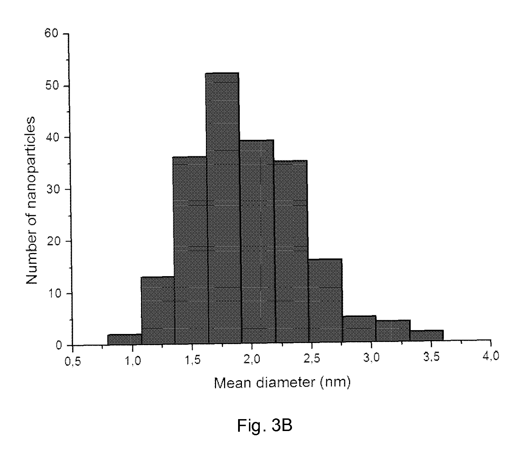

[Pt(dba)₂] (250 mg, 0.36 mmol) was introduced in a Fischer-Porter bottle and dissolved in 35 ml of freshly distilled and degassed THF by argon bubbling. The resulting violet solution was cooled at -60°C and a solution of 15 ml of THF containing ligand B (34.0 mg, 0.074 mmol) was added into the reactor. The Fischer-Porter bottle was pressurized with 3 bar of H₂ and the solution was left to reach slowly the room temperature under vigorous stirring. The homogenous solution, which turns black after 30 minutes of reaction, was kept under stirring overnight at room temperature. After this period of time, excess of H₂ was eliminated and the volume of solvent was reduced to 10 ml under vacuum. 40 ml of pentane were then added to the colloidal suspension which was cooled down to -30°C to precipitate the particles. After filtration under argon with a cannula, the black solid powder was washed twice with pentane (2 x 40 ml) and filtrated again before drying under vacuum. Pt content (ICP): 69%, TEM (see fig. 3A): NPs of 2.0 (0.5) nm mean size (see Figure 3B).

### Example 4. Synthesis of coated nanoparticles CN4: Ligand C, ligand/Pt ratio = 0.2

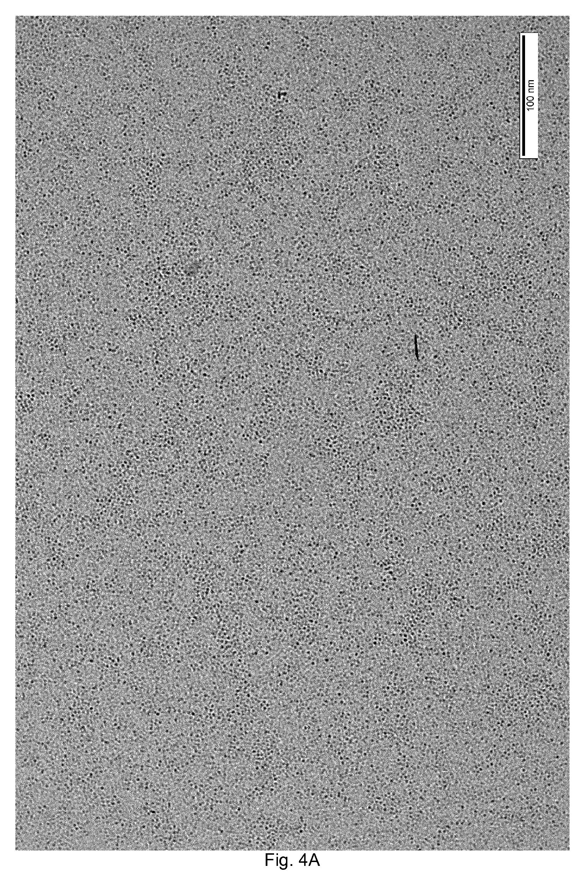

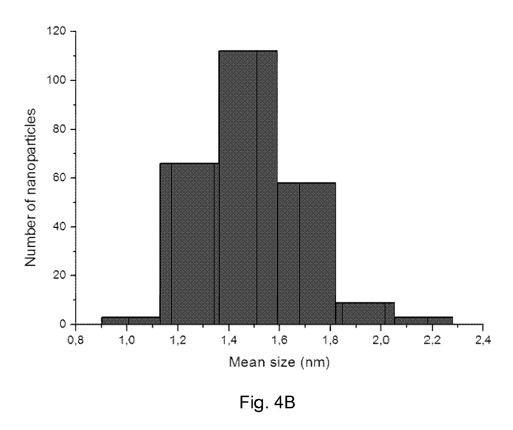

[Pt(dba)₂] (250 mg, 0.36 mmol) was introduced in a Fischer-Porter bottle and dissolved in 35 mL of freshly distilled and degassed THF by argon bubbling. The resulting violet solution was cooled at -60 °C and a solution of 15 ml of THF containing ligand C (27.8 mg, 0.074 mmol) was added into the reactor. The Fischer-Porter bottle was pressurized with 3 bar of H₂ and the solution was left to reach slowly the room temperature under vigorous stirring. The homogeneous solution, which turns black after 30 minutes of reaction, was kept under stirring overnight at room temperature. After this period of time, excess of H₂ was eliminated and the volume of solvent was reduced to 10 mL under vacuum. 40 mL of pentane were then added to the colloidal suspension which was cooled down to -30 °C to precipitate the particles. After filtration under argon with a cannula, the black solid powder was washed twice with pentane (2 x 40 mL) and filtered again before drying under vacuum. Pt content (ICP): 67 %, TEM (Fig. 4A): NPs of 1.5 (0.2) nm mean size (see Figure 4B).

### Example 5. Procedure for H₂ generation

H₂ generation was followed using a Fischer-Porter bottle (25 ml) connected to a vacuum line and coupled to a pressure gauge model GS4200-USB (0-6 bar) plugged to a computer. Quantitative formation of ammonium tetramethoxide (NH₄B(OMe)₄) was determined by ¹¹B NMR (singlet at δ 7.5 ppm) [P. V. Ramachandran, P. D. Gagare, Inorg. Chem. 2007, 46, 7810-7817].

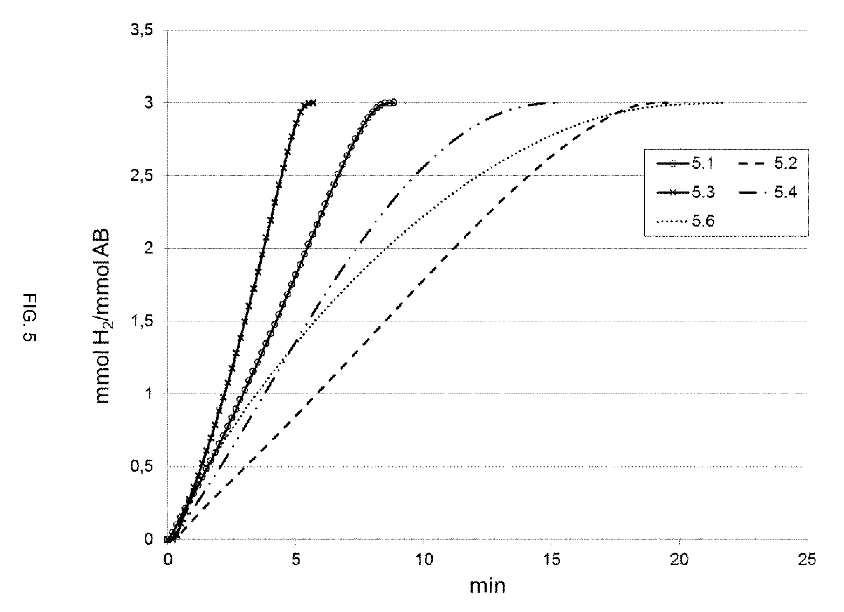

A solution of AB (1.9 M) in MeOH (1.0 mL, 1.9 mmol) was added to a colloidal suspension of the coated nanoparticles of the invention indicated in the table below, in MeOH, thermostated to 30°C (except example 5.5, which was performed at 55°C) and stirred at 750 rpm. H₂ generation was followed by registering the increase of pressure in the system (see table below and Figure 5).

| | coated nanoparticles | | | ml MeOH (suspension) | H₂ generated [mmol H₂/(mmol Pt x min)⁻¹] |
|---|---|---|---|---|---|
| | Ex. | mg | µmol Pt | | |
| 5.1 | CN1 | 1.0 | 3.3 | 0.5 | 191 |
| 5.2 | CN2 | 1.0 | 2.7 | 0.5 | 107 |
| 5.3 | CN3 | 1.0 | 3.5 | 0.5 | 284 |
| 5.4 | CN3 | 0.4 | 1.4 | 0.1 | 253 |
| 5.5 | CN3 | 0.1 | 0.35 | 0.1 | 120 |
| 5.6 | CN4 | 1.0 | 3.4 | 0.5 | 76 |

### Example 6. H₂ generation with catalyst recycling

H₂ generation was followed using a Fischer-Porter bottle (25 ml) connected to a vacuum line and coupled to a pressure gauge model GS4200-USB (0-6 bar) plugged to a computer. Quantitative formation of ammonium tetramethoxide (NH₄B(OMe)₄) was determined by ¹¹B NMR (singlet at δ 7.5 ppm) [P. V. Ramachandran, P. D. Gagare, Inorg. Chem. 2007, 46, 7810-7817].

A solution of AB (1.9 M) in MeOH (1.0 mL, 1.9 mmol) was added to a colloidal suspension of the coated nanoparticles of the invention (1.0 mg) indicated in the table below in MeOH (0.5 mL) thermostated to 25°C for (CN1 and CN3) and 30 °C for CN4 and stirred at 750 rpm. H₂ generation was followed by registering the increase of pressure in the system. After the reaction proceeds to completion, solvent and ammonium tetramethoxide are evaporated under vacuum. MeOH (0.5 mL) and a solution 1.9 M of AB in MeOH (1.0 mL, 1.9 mmol) are added and H₂ generation is followed. The process is repeated five times (see table below).

| | CN1 | CN3 | CN4 |
|---|---|---|---|
| Cycle | TOF^{a} | TOF^{a} | TOF^{a} |
| 1 | 118 | 231 | 76 |
| 2 | 119 | 153 | 62 |
| 3 | 77 | 157 | 42 |
| 4 | 89 | 61 | 49 |
| 5 | 43 | 19 | 27 |
| Amount of catalyst used mg (µmol) | 1.0 (3.3) | 1.0 (3.5) | 1.0 (3.4) |
| Total amount of H₂ generated^{b} | 8640 | 8055 | 8382 |

| | | | |
|---|---|---|---|
| TOF^{a} (mmol H₂) × (mmol Pt)⁻¹ × min⁻¹; Amount of H₂ generated^{b} (mmol H₂)× (mmol Pt)⁻¹ | | | |

## Claims

1. Noble metal nanoparticles coated with terphenylphosphine ligands of formula (I), 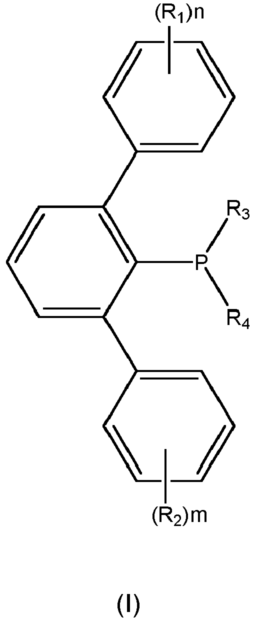 wherein:
each R₁ and R₂ represents independently C₁-C₁₀ alkyl, C₃-C₁₀ cycloalkyl or C₁-C₁₀ alkoxy;
R₃ and R₄ represent independently C₁-C₁₀ alkyl, C₃-C₁₀ cycloalkyl C₁-C₁₀ alkoxy, phenyl or C₅-C₇ heteroaryl;
n and m are whole numbers independently between 0 and 5; and
wherein the noble metal is selected from Ru, Os, Rh, Ir, Pd and Pt and the ligand/noble metal molar ratio is between 0.05 and 0.8.

2. Nanoparticles according to claim 1, wherein the noble metal is selected from Ru, Pd and Pt, preferably the noble metal is Pt.

3. Nanoparticles according to any of claims 1 or 2, wherein n and m is 1 or 2, preferably n is 2 and/or m is 2.

4. Nanoparticles according to any of claims 1 to 3, wherein the terphenylphosphine ligands have the formula (II): 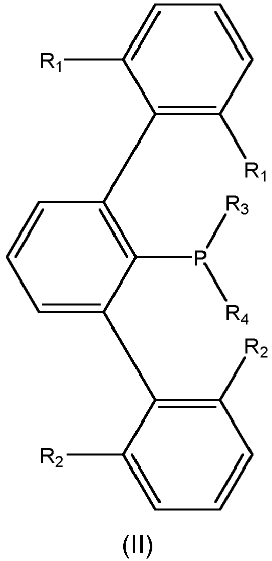 wherein R₁, R₂, R₃ and R₄ are defined in claim 1.

5. Nanoparticles according to any of claims 1 to 4, wherein each R₁ and R₂ represents independently C₁-C₁₀ alkyl or C₃-C₁₀ cycloalkyl, preferably each R₁ and R₂ represents independently C₁-C₄ alkyl, more preferably each R₁ and R₂ represents independently methyl, ethyl, propyl and isopropyl.

6. Nanoparticles according to any of claims 1 to 5, wherein R₁ and R₂ are methyl.

7. Nanoparticles according to any of claims 1 to 5, wherein R₁ and R₂ are isopropyl.

8. Nanoparticles according to any of claims 1 to 7, wherein R₃ and R₄ are independently C₁-C₁₀ alkyl or C₃-C₁₀ cycloalkyl, preferably R₃ and R₄ are independently C₁-C₄ alkyl, more preferably R₃ and R₄ are independently methyl or ethyl.

9. Nanoparticles according to any of claims 1 to 8, wherein R₃ and R₄ are methyl.

10. Nanoparticles according to any of claims 1 to 8, wherein R₃ and R₄ are ethyl.

11. Nanoparticles according to any of claims 1 to 4, wherein the terphenylphosphine ligands have the formula (A), (B) or (C):

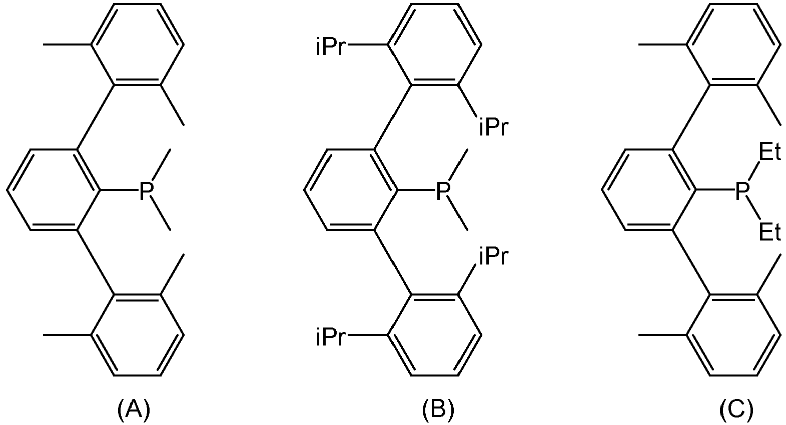

12. Nanoparticles according to any of claims 1 to 11, wherein the ligand/noble metal molar ratio is between 0.1 and 0.7.

13. Nanoparticles according to any of claims 1 to 12, wherein the mean diameter of the noble metal nanoparticles is between 1 nm and 3 nm, preferably between 1.5 nm and 2.5 nm.

14. Process for obtaining the nanoparticles according to any of claims 1 to 13 comprising the steps:
a) provide a solution of a noble metal complex, wherein the noble metal is selected from Ru, Os, Rh, Ir, Pd and Pt; and
b) put the solution of step (a) in contact with the ligand of formula (I) wherein R₁, R₂, R₃, R₄, m and n are defined in claim 1, at a temperature in between -60°C and 30°C under H₂ at a pressure between 1 and 5 bar.

15. Process according to claim 14, wherein the noble metal complex is selected from [Pt₂(dba)₃], [Pt(dba)₂], Pt(COD)₂, PtCl₂(COD)₂, PtMe₂(COD)₂, PtMe₂(NBD), PtPh₂(COD)₂, Pt(NBD)₃, [Pd(dba)₂], [Ru(COD)(COT)], [Rh(allyl)3], [Ir(allyl)₃], Ir(acac)₃, [Rh(OMe)(COD)]₂ [Ir(OMe)(COD)]₂ and mixtures thereof, preferably the noble metal complex is selected from [Pt(dba)₂], [Pt₂(dba)₃] and mixtures thereof.

16. Process according to any of claims 14 and 15, wherein the noble metal is selected from Ru, Pd and Pt, preferably Pt.

17. Use of the nanoparticles according to claims 1 to 13 as a catalyst for hydrogen generation from ammonia-borane.

18. rocess for hydrogen generation from ammonia-borane and an C1-C6 alcohol comprising contacting a C1C6 alcohol with ammonia-borane in the presence of nanoparticles according to claims 1 to 13 at a temperature between 20°C to 60°C.
